Europäisches Patentamt

European Patent Office

Office européen des brevets

(19)

(11) **EP 0 557 310 B1**

(12) **EUROPÄISCHE PATENTSCHRIFT**

(45) Veröffentlichungstag und Bekanntmachung des Hinweises auf die Patenterteilung:
**04.06.1997 Patentblatt 1997/23**

(21) Anmeldenummer: **91918575.1**

(22) Anmeldetag: **04.11.1991**

(51) Int Cl.⁶: **H04N 7/24**, H04N 7/30

(86) Internationale Anmeldenummer:
**PCT/EP91/02080**

(87) Internationale Veröffentlichungsnummer:
**WO 92/09173 (29.05.1992 Gazette 1992/12)**

(54) **VERFAHREN ZUR ADAPTIVEN QUANTISIERUNG ZWECKS DATENREDUKTION BEI DER ÜBERTRAGUNG VON DIGITALEN BILDERN**

PROCESS FOR ADAPTIVE QUANTISATION TO REDUCE DATA IN THE TRANSMISSION OF DIGITAL IMAGES

PROCEDE POUR LA QUANTIFICATION ADAPTIVE EN VUE DE LA REDUCTION DE DONNEES LORS DE LA TRANSMISSION D'IMAGES NUMERIQUES

(84) Benannte Vertragsstaaten:
**DE FR GB IT NL**

(30) Priorität: **16.11.1990 EP 90121969**

(43) Veröffentlichungstag der Anmeldung:
**01.09.1993 Patentblatt 1993/35**

(73) Patentinhaber: **SIEMENS AKTIENGESELLSCHAFT 80333 München (DE)**

(72) Erfinder: **JASS, Wieland D-8011 Baldham (DE)**

(56) Entgegenhaltungen:
EP-A- 0 246 701          WO-A-88/10544
DE-A- 3 414 982          DE-A- 3 511 713
DE-A- 3 940 554

• **IEEE TRANSACTIONS ON COMMUNICATION TECHNOLOGY. Bd. 23, Nr. 7, 30. Juli 1975, NEW YORK US Seiten 785 - 786; J.GIMLETT: 'Use of Activity Classes in adaptive transform image coding'**

## Beschreibung

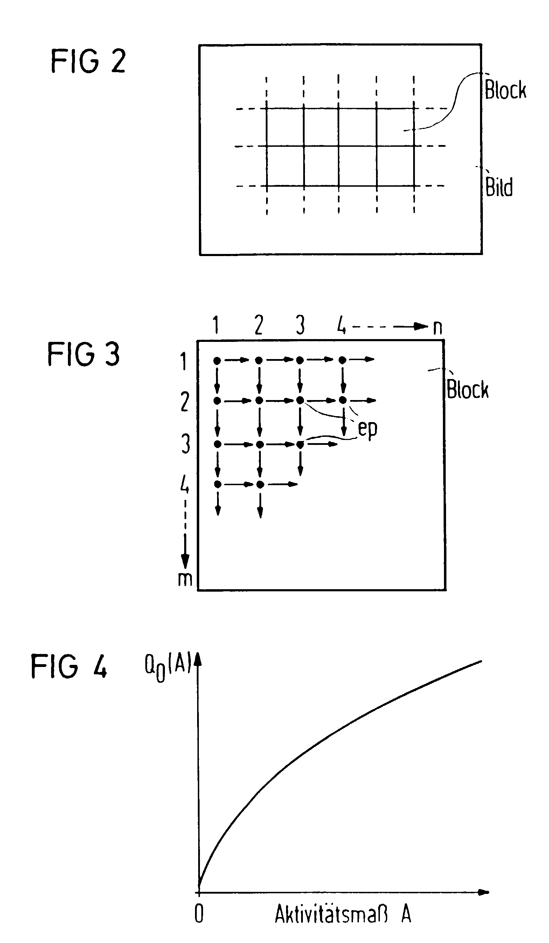

Eine übliche Vorgehensweise bei der Datenreduktion zur Übertragung digitaler Bilder oder Bildfolgen ist die Unterteilung von Bildbereichen in kleinere Bereiche, sog. Blöcke (Figur 2). Diese Blöcke sind typischerweise 8 . 8 oder 16 . 16 Pixel (Bildelemente) groß (Figur 3). Beispiele für solche blockbezogenen Verfahren zur Bildcodierung sind die sog. Transformationsverfahren, deren am häufigsten angewandter Vertreter, die sog. Diskrete Cosinustransformation (D.C.T.) ist. In den Figuren la bzw. lb sind Signalflußpläne für Codierverfahren dieser Art für Einzelbilder oder Bildfolgen dargestellt.

Zweck der Codierung ist eine Datenreduktion, wodurch eine digitale Übertragung von Bildern oder Bildfolgen in vielen Fällen erst möglich wird. Ein bekanntes Prinzip ist dabei die sog. Redundanzreduktion, bei der statistische Eigenschaften der Bildsignale zur Datenreduktion ausgenutzt werden. Bei alleiniger Verwendung der Redundanzreduktion ist die vollständige Rekonstruierbarkeit der Bildinformation aus den codierten Daten gewährleistet. Allein mit Hilfe einer Pedundanzreduktion kann jedoch normalerweise nur eine Datenkompression um Faktoren 2 bis 3 erreicht werden. Bei den meisten Anwendungen der Bild- und Bildfolgencodierung werden aber höhere Kompressionsfaktoren benötigt, z.B. wenigstens ein Kompressionsfaktor 7 beim hochauflösenden Fernsehen (High Definition Television, HDTV). Um solche Kompressionsfaktoren und höhere, wie etwa beim Bildtelefon zu erreichen, müssen auch Methoden der Irrelevanzreduktion verwendet werden. Hierbei geht jedoch die ursprüngliche Signalinformation teilweise verloren und es entstehen Bildübertragungsfehler. Angestrebt wird aber, daß diese Bildfehler für einen Betrachter nicht sichtbar oder möglich wenig störend sind.

Bei einer Transformationscodierung werden Redundanz- und Irrelevanzreduktion im allgemeinen gemeinsam angewendet auf die Signalwerte im Transformationsbereich eines Bildblockes (A.N.Netravali, W.G.Haskell: "Digital Pictures, representation und compression", Plenum Press, New York, 1988). Bei der DCT sind das die sog. DCT-Koeffizienten. Typische Vorgehensweisen bei der Irrelevanzreduktion sind einmal ganze Untermengen von DCT Koeffizienten einfach wegzulassen, zum anderen die übrigbleibenden, signifikanten Koeffizienten gröber zu quantisieren, d.h. sie in einem gröberen Raster von Werten darzustellen, als es ihnen ursprünglich zugeordnet ist. Ein Werteraster kann durch eine Maßzahl Q für seine Feinheit charakterisiert werden. Je größer Q ist, umso gröber ist das Raster. Bei einer sog. linearen Quantisierung ist diese Maßzahl direkt die Quantisierungsschrittweite, d.h. das einheitliche Intervall zwischen zwei benachbarten Rasterwerten. Verschiedene Arten der Quantisierung von DCT-Koeffizienten sind bekannt. In einigen Verfahren werden die einzelnen Koeffizienten verschieden fein quantisiert. Die unterschiedlichen Feinheiten sind dabei aus Annahmen über die visuelle Bedeutung der Koeffizienten abgeleitet. Ein solches Verfahren ist z.B. in (D.McLaren, D.T.Nguyen: "Video Bitrate reduction through Psychovisual impression", Proc. 1990 Video Communications Workshop, Melbourne, 9. bis 11.7.1990) beschrieben. In einem anderen Verfahren werden alle Koeffizienten mit gleicher Feinheit quantisiert, wie es z.B. in (W.Tengler, W.Jaß: "Interlaced and Progressive HDTV-Coding, a Comparison for 140 Mbit/s- Transmission" Proceedings 1990 Austr. Video Communication Workshop Melbourne, 9.-11.7.1990) beschrieben ist.

Die verschiedenen Arten der Quantisierung erzeugen verschiedene Arten von Bildfehlern. Bei einer Transformation wie der DCT sind aber unabhängig vom verwendeten Quantisierungsschema diese Bildfehler im allgemeinen jeweils über einen ganzen Block im Bildbereich verteilt. Ob diese Fehler entweder gar nicht sichtbar sind oder visuell mehr oder weniger stören, hängt einmal vom ursprünglichen Bildinhalt und zum anderen von der mittleren Amplitude der Fehler in einem Block ab. Diese mittlere Fehleramplitude steht direkt im Zusammenhang mit dem vorher genannten Quantisierungsparameter Q für einen Block. Je größer Q eingestellt wird, desto kleiner ist die zur Codierung eines Blocks benötigte Datenrate, aber desto größer ist im allgemeinen auch die mittlere Fehleramplitude.

In fortschrittlichen Verfahren der Einzelbild und Bildfolgencodierung wird nun der Quantisierungsparameter Q je Block an den Bildinhalt so angepaßt (adaptiert), daß bei Einhalten bestimmter Grenzen für die resultierende Datenrate die Bildfehler visuell möglichst wenig stören. Dabei wird der Bildinhalt in einem Block analysiert und der Quantisierungsparameter Q in Abhängigkeit von dem Ergebnis der Analyse eingestellt. Diese Analyse kann entweder an Pixelblöcken, d.h. an Blöcken von Bildelementen, oder an Blöcken von DCT-Koeffizienten vorgenommen werden. Analysemethoden, welche Blöcke von Bildelementen analysieren, sind z.B. in den Veröffentlichungen von McLaren (McLaren 1990) und Tengler (Tengler 1990) angegeben. In diesen Veröffentlichungen wird jedoch nicht auf die möglichen Mängel der dort beschriebenen adaptiven Quantisierungsverfahren eingegangen, welche mit dem erfindungsgemäßen Verfahren verbessert werden.

Die allgemeine Vorgehensweise der in den Veröffentlichungen von McLaren und Netravali beschriebenen Analysemethoden soll im folgenden kurz beschrieben werden, um für die Beschreibung der vorliegenden Erfindung auf die hierbei eingeführten Begriffe und Schreibweisen zurückgreifen zu können. Bei den bereits bekannten Analysemethoden wird zunächst aus den Bildsignalwerten aller Pixel in einem Block ein sog. Aktivitätsmaß berechnet. Die Größe dieses Aktivitätsmaßes steht in direktem Verhältnis zur Stärke der mittleren Amplitudeschwankung der Bildsignalwerte aller Bildpunkte des betrachteten Blockes. In dem Aufsatz von Tengler und Jasz wird beispielsweise als Aktivitätsmaß A die Summe von absoluten örtlichen Bildsignaldifferenzen verwendet (Figur 3):

$$(1) \quad A = \sum_{m=1}^{M} \sum_{n=1}^{N} (|y(m,n+1) - y(m,n)| + |y(m+1,n)-y(m,n)|)$$

mit

y(m,n): Bildsignalwert des Pixel mit dem Index m,n,
m: Zeilenindex, n: Spaltenindex im Block,
M,N: Blockseitenlängen, z.B. 8 oder 16.

Als Funktion des auf diese Weise berechneten Aktivitätsmaßes wird ein vorläufiger Parameter P, z.B. aus einer Tabelle entnommen:

$$(2) \qquad P = Q_O(A).$$

Der für einen Block tatsächlich angewendete Quantisierungsparameter Q wird schließlich aus P durch Multiplikation mit einem Skalenfaktor $F_Q$ gewonnen:

$$(2') \qquad Q = F_Q \cdot P$$

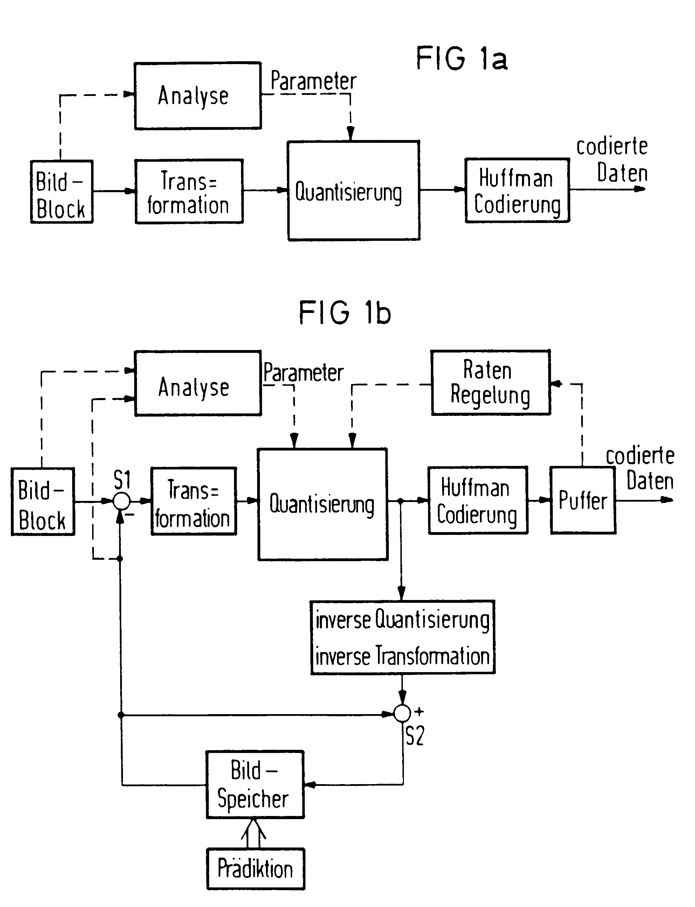

$F_Q$ ist ein Faktor, der für die Regelung zur Einhaltung von Ratenbegrenzungen von dem Füllstand eines Datenpuffers abgeleitet ist (Figur 1b). Ein Beispiel einer Funktion $Q_O(A)$ ist z.B. in der Veröffentlichung von W.Tengler 1990 beschrieben und in Figur 4 graphisch dargestellt.

Das in dem Aufsatz von W.Tengler beschriebene adaptive Quantisierungsschema führt bereits bei nicht zu strengen Nebenbedingungen an die Größe der resultierenden Datenrate zu einer guten Bildqualität. Bei bestimmten Bildinhalten können jedoch trotzdem durch die Quantisierung entstehende Bildfehler sichtbar werden. Solche Bildinhalte sind typischer weise dadurch charakterisiert, daß einem Block sowohl Bereiche mit hoher Aktivität, d.h. mit feinen hochkontrastigen Details, als auch Bereiche mit geringer Aktivität, d.h. mit nur schwach variierenden Bildinhalt enthalten sein können.

Die Einstellung des Quantisierungsparameters ist nun aber hinsichtlich der benötigten Datenrate und mit dem Ziel der Vermeidung von Bildfehlern optimiert unter der Annahme, daß die Aktivität in einem Block relativ gleichförmig verteilt ist. Je höher die Aktivität ist, umso größer dürfen dann die Bildfehler sein ohne störend sichtbar zu werden, d. h. umso größer darf der Quantisierungsparameter zur Reduzierung der Datenrate eingestellt werden. Bei dem hier angenommenen Verfahrenstyp zur Codierung von digitalen Bildern oder Bildfolgen sind jedoch die Bildfehler durch die Quantisierung im allgemeinen gleichförmig über einen Block verteilt. Daher kann der für den ganzen Block eingestellte Quantisierungsparameter zu Bildfehlern führen, die zwar nicht in den Teilen des Blocks mit höherer Aktivität, wohl aber in den mit geringerer Aktivität störend sichtbar werden.

Ein ähnlicher Stand der Technik ist auch der DE-A-3 940 554 zu entnehmen.

Der vorliegenden Erfindung liegt die Aufgabe zugrunde, diese Nachteile der beschriebenen bekannten Verfahren zu vermeiden. Zur Lösung dieser Aufgabe wird ein Verfahren zur Datenreduktion bei der Übertragung digitaler Bilder oder Bildfolgen mit Merkmalen nach Anspruch 1 angegeben.

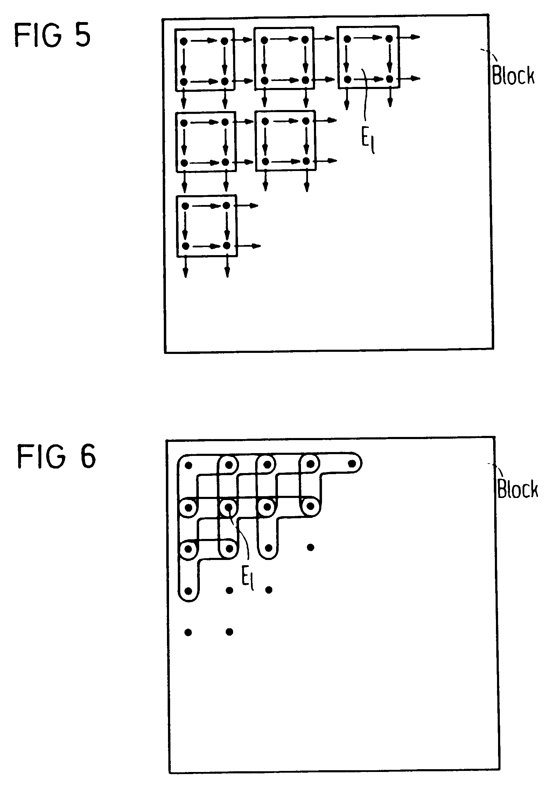

Nach der Erfindung wird für die Bestimmung des Quantisierungsparameters Q ein Block im Bildbereich selbst wieder in eine Anzahl L kleinerer Teilbereiche E(l) unterteilt (Figur 5). Diese Teilbereiche sind durch eine Nummer l: = 1 ... L gekennzeichnet. Für jeden Teilbereich E(l) wird wie vorher für einen ganzen Block ein Aktivitätsmaß A(l) berechnet als Summe von absoluten örtlichen Pixelwertdifferenzen zwischen horitontal und vertikal benachbarten Pixeln:

$$(3) \quad A = \sum_{m,n \, \in \, E(1)} (|y(m,n+1) - y(m,n)| + |y(m+1,n) - y(m,n)|).$$

Für die Differenzenoperation werden am Rand eines Teilbereichs Pixel (= Bildpunkte) benötigt, die außerhalb des Teilbereichs liegen, insbesondere am Blockrand selbst. Für jeden Teilbereich E(l) wird aus dem Aktivitätsmaß A(l) ein Parameter ermittelt, der für die Aktivität in dem Teilbereich (l) charakteristisch ist. Durch Summation über alle Teilbereiche des Blocks werden aus den für die Teilbereiche(1)charakteristischen Parametern P(l) ein vorläufiger Parameter P für den gesamten Block berechnet. Der für einen Block tatsächlich angewendete Quantisierungsparameter Q wird schließlich aus P wieder durch eine Skalierung gewonnen.

Ein auf diese Weise ermittelter Quantisierungsparameter Q hat tatsächlich die Eigenschaft in den vorher beschriebenen kritischen Situationen mit unterschiedlich aktivem Bildanteil eine besser angepaßte Quantisierung zu bewirken. Das bedeutet, daß mit Hilfe des erfindungsgemäßen Verfahrens bei Blöcken mit kritischem Bildinhalt im allgemeinen eine relativ feinere Quantisierung eingestellt wird, als nach den vorher geschilderten bekannten Verfahren.

Daß mit dem erfindungsgemäßen Verfahren auch die lokale Beziehung zwischen Datenrate und Bildfehler nicht verschlechtert wird, kann wie folgt plausibel gemacht werden: Die für die lokale Datenrate und die lokalen Bildfehler optimierte Funktion $Q_O$ wird nun statt auf einem ganzen Block auf kleinere Teilbereiche angewendet, in einer bevorzugten Ausführung sogar auf einzelne Pixel mit ihren Nachbarn. Die erfindungsgemäße Berechnung des Quantisierungsparameters kann dann in der Wirkung bezüglich Datenrate und Bildfehler einfach als Mittelung über einen Blockbereich aufgefaßt werden.

Ein Vorzug des erfindungsgemäßen Verfahren ist seine Regelmäßigkeit. Es besteht aus einer Wiederholung einer kleinen Anzahl von einfachen Operationen. Wegen der damit verbundenen einfachen Kontrollstruktur ist es sehr gut geeignet für eine Realisierung mit Hilfe von integrierten Schaltkreisen. Insbesondere können die den Teilbereichen zugeordneten Operationen auch parallel ausgeführt werden.

Ein weiterer Vorteil des erfindungsgemäßen Verfahrens ist es, daß dieses Verfahren in bestehende Codierverfahren, wie sie z.B. in dem Aufsatz von W.Tengler beschrieben sind, auf einfache Weise so eingefügt werden kann, daß die notwendigen Veränderugnen das Gesamtverfahren nicht wesentlich komplizieren. Zum Beispiel werden in den in dem Aufsatz von W.Tengler beschriebenen Verfahren blockbezogene Summen A von absoluten örtlichen Differenzen, wie sie in Formel (I) definiert sind, nicht nur als Aktivitätsmaß für eine adaptive Quantisierung benutzt, sondern auch als Umschaltkriterium zwischen verschiedenen Modi des Codierverfahrens. Dabei wird einer der berechneten Parameter A nicht nur für die Umschaltkriterien benutzt, sondern gleichzeitig auch als Aktivitätsmaß für die adaptive Quantisierung, so daß dieser Parameter nicht zusätzlich berechnet werden muß.

Weiterbildungen der Erfindung ergeben sich aus den Unteransprüchen.

Figur la zeigt den Signalflußplan eines Transformationscodierverfahrens mit adaptiver Quantisierung, wobei der Quantisierungsparameter mit Hilfe einer Bildblock-Analyse gewonnen wird.

Figur 1b zeigt den Signalflußplan eines Differenzpulscodemodulationsverfahrens zur Bildcodierung unter Einschluß einer blockweisen Transformation.

Figur 2 zeigt die Aufteilung eines Bildes in Blöcke.

Figur 3 zeigt die Zusammensetzung eines Blockes aus Bildpunkten (ep) und die Differenzoperationen zwischen benachbarten Bildpunkten, angedeutet durch Pfeile.

Figur 4 zeigt den typischen Verlauf der Funktion $Q_O$ als Funktion des Aktivitätsmaßes A.

Figur 5 zeigt die Aufteilung eines Bildblockes in kleinere Teilbereiche E(I).

Figur 6 zeigt die Aufteilung eines Bildblockes in kleinere Teilbereiche E(I), welche aus einzelnen Bildpunkten und ihren nächsten Nachbarn bestehen.

Im folgenden wird die Erfindung anhand eines bevorzugten Ausführungsbeispiels und anhand der Figuren beschrieben.

Zur Übertragung eines Bildes bzw. eines Elementes einer Bildfolge wird das zu übertragende digitale Bild zunächst in eine Anzahl von Blöcken (Figur 2) eingeteilt. Jeder Block besteht aus einer Anzahl von Bildpunkten ep (Pixeln) wie in Figur 3 abgebildet. Zur Durchführung des Verfahrens wird jeder Block in kleinere Teilbereiche E(I) mit I: = 1 ...,L eingeteilt. Dabei umfaßt jeder Teilbereich E(I) im allgemeinen mehrere benachbarte Bildpunkte (Figur 5). Bei einem bevorzugten Ausführungsbeispiel der Erfindung besteht jeder Teilbereich E(I) aus einem Bildpunkt und den beiden direkten Nachbarn dieses Bildpunktes (Figur 6) in der nachfolgenden Zeile bzw. in der nachfolgenden Spalte.

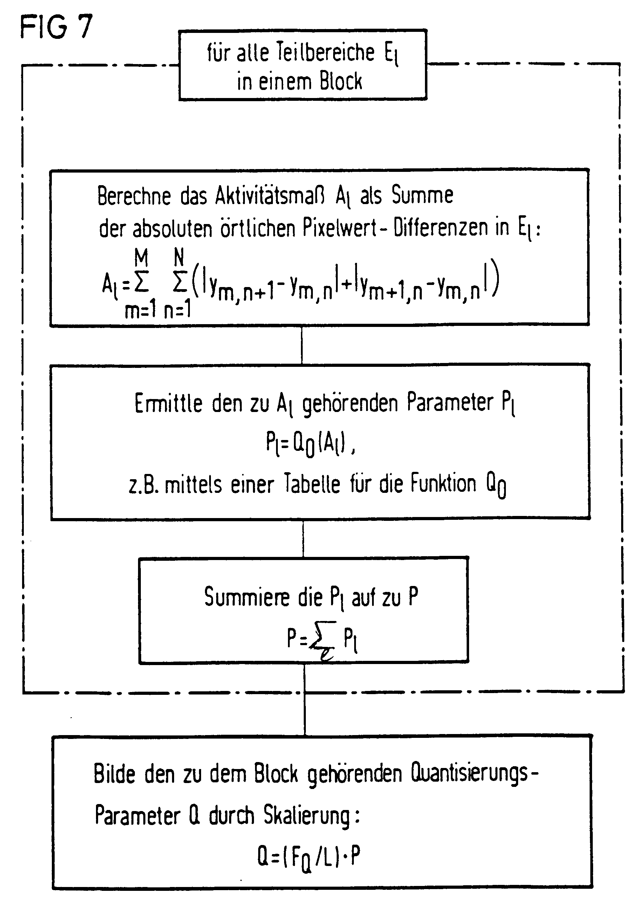

Figur 7 zeigt einen Signalflußplan des Verfahrens. Für alle Teilbereiche E(I) eines jeden Blocks wird zunächst das in Formel (3) definierte Aktivitätsmaß A berechnet. Dieses Aktivitätsmaß A(I) ist für jeden Teilbereich E(I) die Summe der absoluten Eildsignal-Differenzen aller Bildpunkte in dem Teilbereich E(I). Aufgrund seiner Definition ist dieses Aktivitätsmäß O, falls das Bildsignal in dem betreffenden Teilbereich E(I) homogen ist. Ändern sich hingegen die Bildsignalwerte innerhalb eines Teilbereichs E(I) stark, so ist das Aktivitätsmaß A(I) für diesen Teilbereich merklich von O verschieden und umso größer je größer die Änderung der Bildsignalwerte innerhalb des Teilbereichs E(I) ist. Für jeden Teilbereich E(I) wird nun mit Hilfe des für ihn ermittelten Aktivitätsmaßes A(I) ein Parameter P(I) ermittelt, welcher eine Funktion $Q_O$ der Aktivität A(I) ist. Dieser Zusammenhang ist auch in der Formel (2) wiedergegeben. Die Funktion $Q_O$ kann vorteilhaft mit Hilfe einer Tabelle realisiert werden, welche jedem möglichen Wert des Aktivitätsmaßes den zugehörigen Parameter zuordnet.

Die Funktion $Q_O$ ist eine geeignet gewählte, vorzugsweise monoton steigende, konvexe Funktion des Aktivitätsmaßes A, welche vorzugsweise so gewählt wird, daß ihre Steigung mit größeren Werten der Aktivität A geringer wird. Ein typischer Verlauf der Funktion $Q_O$ als Funktion des Aktivitätsmaßes A ist in Figur 4 wiedergegeben. Die optimale Wahl der Funktion $Q_O$ ist abhängig von den Eigenschaften des zu übertragenden Bildmaterials und von den Präferenzen des Verfahrensanwenders hinsichtlich der Übertragungseigenschaften und der Bildqualität. Mögliche vorteilhafte Wahlen für den Verlauf der Funktion $Q_O$ ergeben sich z.B. aus der Veröffentlichung von W.Tengler 1990.

Durch Summation der Parameter P(l) aller Teilbereiche E(l) ergibt sich in einem weiteren Schritt des Verfahrens ein für die Aktivität des betrachteten Blockes charakteristischer Parameter P. Aus diesem Parameter P ergibt sich nun für jeden Block unmittelbar der zugehörige Quantisierungsparameter Q mit Hilfe der Skalierung

$$(4) \qquad Q = (F_Q/L) \cdot P$$

Der Parameter Q wird demnach völlig analog zu bekannten Verfahren aus dem Parameter P berechnet, wobei allerdings wegen der Summation über L Teilbereiche bei der Berechnung des Parameters P bei dieser Skalierung durch L geteilt werden muß. Dies ist in der Formel (4) berücksichtigt.

Es ist ein besonderer Vorteil des hier beschriebenen Verfahrens, daß mit seiner Hilfe in aus dem Stand der Technik gewohnter Weise durch Analyse von Bildblöcken zu jedem Bildblock ein Quantisierungsparameter gefunden wird. Aus diesem Grunde ist die Schnittstelle des Analyseverfahrens zum übrigen Codierverfahren unverändert. Deshalb läßt sich dieses Verfahren ohne Probleme im Zusammenhang mit bekannten Codier verfahren (Figur 1a, Figur 1b) verwenden.

Andererseits ist mit Hilfe des hier beschriebenen Verfahrens eine wesentlich detailiertere Analyse des Bildinhalts eines Bildblocks möglich, als dies bei den aus der Stand der Technik bekannten Verfahren der Fall ist. Deshalb entspricht der mit Hilfe des hier beschriebenen Verfahrens bestimmte Quantisierungsparameter Q besser als bei den bekannten Verfahren der tatsächlichen Aktivität des Bildsignals in einem Bildblock. Letztlich ermöglicht das erfindungsgemäße Verfahren damit die Übertragung eines jeden Bildblocks mit der ihm angepaßten Datenrate. Dies ist insbesondere auch dann der Fall, wenn der zu übertragende Bildblock aus besonders aktiven und besonders inaktiven Bereichen besteht.

**Patentansprüche**

1. Verfahren zur adaptiven Quantisierung zwecks Datenreduktion bei der Übertragung digitaler Bilder mit folgenden Schritten:

a) ein zu übertragender Bildbereich wird in eine Vielzahl von Blöcken unterteilt;
b) jeder Block wird in Teilbereiche E(l) mit l=1, ..., L unterteilt;
c) für jeden Teilbereich E(l) wird ein Aktivitätsmaß A(l) bestimmt;
d) für jeden Teilbereich E(l) wird aus dem Aktivitätsmaß A(l) ein Parameter P(l) mit Hilfe einer Funktion $Q_O$ nach der Beziehung

$$P(l) = Q_O(A(l))$$

bestimmt,
e) durch Summation über alle Teilbereiche E(l) jedes Blockes wird ein für diesen Block charakteristischer Parameter berechnet,

$$P = \sum_1 P(1)$$

f) für jeden Block wird aus dem Parameter P ein Quantisierungsparameter

$$Q = (F_Q/L) \cdot P$$

mit Hilfe eines Skalierungsfaktors $F_Q$ berechnet,
g) der zu übertragende Bildbereich wird blockweise einer Transformation unterworfen, wobei Transformationskoeffizienten ermittelt werden, welche für jeden Block in Abhängigkeit von dem Wert des zu dem jeweiligen Block gehörenden Quantisierungsparameters Q quantisiert werden.

2. Verfahren nach Anspruch 1,
dadurch **gekennzeichnet,**
daß das Aktivitätsmaß durch die Beziehung

$$A = \sum_{m,n \in E(l)} (|y(m,n+1) - y(m,n)| + |y(m+1,n) - y(m,n)|).$$

gegeben ist, wobei m bzw. n Indizes von Bildpunkten innerhalb eines Teilbereiches eines Bildblockes sind, und wobei y das Bildsignal bezeichnet.

3. Verfahren nach einem der vorhergehenden Ansprüche,
dadurch **gekennzeichnet,**
daß zur Transformation der zu übertragenden Bildbereiche die Diskrete Cosinustransformation verwendet wird.

4. Verfahren nach einem der vorhergehenden Ansprüche,
dadurch **gekennzeichnet,**
daß die Teilbereiche der Blöcke jeweils aus einem Bildpunkt und seinen nächsten Nachbarn in der nachfolgenden Zeile bzw. der nachfolgenden Spalte bestehen.

**Claims**

1. Process for adaptive quantization for the purpose of data reduction in the transmission of digital images, having the following steps:

   a) an image region to be transmitted is subdivided into a multiplicity of blocks;
   b) each block is subdivided into subregions $E(l)$, where $l = 1, ..., L$;
   c) an activity measure $A(l)$ is determined for each subregion $E(l)$;
   d) a parameter $P(l)$ is determined for each subregion $E(l)$ from the activity measure $A(l)$ with the aid of a function $Q_O$ in accordance with the relationship

   $$P(l) = Q_0(A(l)),$$

   e) by summing over all the subregions $E(l)$ of each block a parameter

   $$P = \sum_{l} P(l)$$

   characteristic of each block is calculated,
   f) a quantization parameter

   $$Q = (F_Q/L) \cdot P$$

   is determined for each block from the parameter P with the aid of a scaling factor $F_Q$, and
   g) the image region to be transmitted is subjected in blockwise fashion to a transformation, transformation coefficients being determined which are quantized for each block as a function of the value of the quantization parameter Q belonging to the respective block.

2. Process according to Claim 1, characterized in that the activity measure is given by the relationship

$$A = \sum_{m,n \, \in \, E(l)} (|y(m,n+1) - y(m,n)| + |y(m+1,n) - y(m,n)|).$$

m and n respectively denoting indices of pixels within a subregion of an image block, and y denoting the image signal.

3. Process according to one of the preceding claims, characterized in that discrete cosine transformation is used to transform the image regions to be transmitted.

4. Process according to one of the preceding claims, characterized in that the subregions of the blocks in each case comprise a pixel and its nearest adjacent pixel in the subsequent row or the subsequent column.


**Revendications**

1. Procédé pour la quantification adaptive dans un but de réduction des données lors de la transmission d'images numériques, avec les étapes suivantes :

    a) une zone d'image à transmettre est divisée en une multitude de blocs;

    b) chaque bloc est divisé en zones partielles E(l) avec l = 1, ..., L;

    c) pour chaque zone partielle E(l), on détermine une zone d'activité A(l);

    d) pour chaque zone partielle E(l), on détermine à partir de la mesure d'activité A(l) un paramètre P(l) à l'aide d'une fonction $Q_O$ selon la relation :

$$P(l) = Q_O (A(l))$$

    e) par l'addition de toutes les zones partielles E(l) de chaque bloc, on calcule un paramètre caractéristique pour ce bloc

$$P = \sum_l P(l)$$

    f) pour chaque bloc, on calcule à partir du paramètre P un paramètre de quantification :

$$Q = (F_Q/L) \cdot P$$

    à l'aide d'un facteur de mise en échelle $F_Q$,

    g) la zone d'image à transmettre est soumise à une transformation par bloc, des coefficients de transformation étant déterminés qui sont quantifiés pour chaque bloc en fonction de la valeur du paramètre de quantification Q correspondant au bloc respectif.

2. Procédé selon la revendication 1, caractérisé en ce que la mesure d'activité est donnée par la formule

EP 0 557 310 B1

$$A = \sum_{m,\,n\,\varepsilon\,E\,(l)} ( \mid y\,(m, n + l) - y\,(m, n) \mid + \mid y\,(m + l, n) - y\,(m, n) \mid )$$

m et n étant des indices de points d'image à l'intérieur d'une zone partielle d'un bloc d'image et y étant le signal d'image.

3. Procédé selon l'une des revendications précédentes, caractérisé en ce que pour la transformation de la zone d'image à transmettre, on utilise la transformation discrète du cosinus.

4. Procédé selon l'une des revendications précédentes, caractérisé en ce que les zones partielles des blocs sont composées chaque fois d'un point d'image et de ses voisins les plus proches dans la ligne suivante ou la colonne suivante.

EP 0 557 310 B1

# FIG 1a

# FIG 1b

FIG 2

FIG 3

FIG 4

$Q_0(A)$

$0$     Aktivitätsmaß  $A$

FIG 5

Block

$E_l$

FIG 6

Block

$E_l$

# FIG 7

für alle Teilbereiche $E_l$
in einem Block

Berechne das Aktivitätsmaß $A_l$ als Summe
der absoluten örtlichen Pixelwert- Differenzen in $E_l$ :

$$A_l = \sum_{m=1}^{M} \sum_{n=1}^{N} \left( \left| y_{m,n+1} - y_{m,n} \right| + \left| y_{m+1,n} - y_{m,n} \right| \right)$$

Ermittle den zu $A_l$ gehörenden Parameter $P_l$

$$P_l = Q_0(A_l),$$

z.B. mittels einer Tabelle für die Funktion $Q_0$

Summiere die $P_l$ auf zu P

$$P = \sum_{l} P_l$$

Bilde den zu dem Block gehörenden Quantisierungs-

Parameter Q durch Skalierung :

$$Q = (F_Q / L) \cdot P$$